# EUROPÄISCHE PATENTSCHRIFT

(11) **EP 3 095 736 B1**
(45) Veröffentlichungstag und Bekanntmachung des Hinweises auf die Patenterteilung: **09.11.2022**
(21) Anmeldenummer: 16162879.7
(22) Anmeldetag: 30.03.2016
(51) Int. Cl.: B65G 15/62, B65G 21/02

(54) **FÖRDERSTRECKE MIT EINER ANZAHL VON MIT TRAVERSEN GEKOPPELTEN BANDUNTERSTÜTZUNGMODULEN**
CONVEYOR LINE WITH CONVEYOR BELT SUPPORTING MODULES COUPLED TO TRANSVERSE MEMBERS
LIGNE DE CONVOYAGE AVEC DES MODULES DE SUPPORT DE BANDE DE CONVOYAGE COUPLÉS À DES SUPPORTS TRANSVERSAUX

(30) Priorität: 22.05.2015 DE 102015108185
(43) Veröffentlichungstag der Anmeldung: 23.11.2016
(73) Patentinhaber: Reich, Konrad, 83135 Schechen (DE)
(72) Erfinder: Reich, Konrad, 83135 Schechen (DE)
(74) Vertreter: Beckord & Niedlich Patentanwälte PartG mbB

(56) Entgegenhaltungen:
- EP-A2- 1 589 309
- WO-A1-2016/035011
- GB-A- 996 969
- GB-A- 2 209 272
- US-B1- 7 000 759

## Beschreibung

Die Erfindung betrifft eine Förderstrecke zum Transport von Objekten, insbesondere Transportkisten, mittels eines Förderbands, eine Förderanlage mit einer solchen Förderstrecke, sowie ein Verfahren zum Aufbau einer Förderstrecke.

Förderstrecken mit Förderbändern werden in sehr vielen Bereichen der Industrie und des Handels benötigt, um Güter in Lagern zur Distribution der Waren oder in Herstellungsbetrieben von einer Position zu einer anderen Position zu verbringen. Oftmals werden die Güter bzw. Waren zunächst in normierte Transportkisten gelegt und diese werden dann entlang der Förderstrecken zu den gewünschten Positionen verbracht. Üblicherweise weist eine solche Förderstrecke ein Bandtragegerüst auf, in welchem das Förderband während einer Bewegung in die Förderrichtung getragen und geführt wird. Dieses Bandtragegerüst umfasst in der Regel zwei sich in einer Förderstreckenlängsrichtung verlaufende Wangen und eine Anzahl quer zur Förderstreckenlängsrichtung zwischen den Wangen verlaufender Traversen. Eine Kopf- und eine Hecktrommel sorgen meist dafür, dass das Band von der Oberseite der Förderstrecke, auf der die Güter transportiert werden, zur Unterseite und wieder zurück zur Oberseite umgelenkt wird, wobei zumindest eine der Trommeln als Antriebswelle für das Förderband dient. Üblicherweise werden im Tragegerüst in Förderstreckenlängsrichtung an den Traversen Schienen montiert, die das Förderband entlang des Obertrums unterstützen. Verwendet werden hierbei lange, dünne stegartige Stranggussprofile, die im Bereich der Befestigung mit den Traversen Metalleinsätze aufweisen, um für eine sichere Fixierung mit den Traversen zu sorgen. Alternativ können auch Metallschienen verwendet werden, die auf der Oberseite mit einer Gleitfläche aus einem geeigneten Kunststoff versehen sind. Hierbei handelt es sich jedoch immer um Spezialanfertigungen, die speziell auf die Länge der Förderstrecke zugerichtet werden, was die Kosten beim Aufbau einer neuen Förderstrecke erhöht.

In der DE 198 40 394 A1 wird daher vorgeschlagen, spezielle Traversen zu verwenden, welche Aussparungen aufweisen, in die sich im Wesentlichen in Förderstreckenlängsrichtung verlaufende stegartige, relativ schmale Steckelemente einstecken lassen. Diese Steckelemente oder Stützelemente sind, ebenso wie die Traversen selber, aus Metall. Um den Abrieb am Förderband zu verringern, können auf die Stützelemente obenseitig Vorrichtungen zur Auflagenvergrößerung aufgesteckt werden. Auch dieser Aufbau ist, obwohl er bereits aufgrund der Modularität erheblich flexibler ist, relativ aufwändig, weshalb sich diese Konstruktion in der Praxis auch nicht durchgesetzt hat. Daher werden üblicherweise immer noch die eingangs genannten Spezialanfertigungen mit langen Schienen bevorzugt.

Aus der US 7 000 759 B1 ist eine Förderstrecke zum Transport von Objekten mittels eines Förderbands bekannt, welche ein Bandtragegerüst mit zwei sich in einer Förderstreckenlängsrichtung verlaufenden Längsträgern und einer Anzahl quer zur Förderstreckenlängsrichtung verlaufenden Traversen umfasst. Zwei mit den Traversen gekoppelte Bandunterstützungsmodule weisen jeweils eine im bestimmungsgemäßen Einsatz zu einem Förderband weisende Bandauflagefläche auf.

Es ist eine Aufgabe der vorliegenden Erfindung, zu diesen herkömmlichen Förderstrecken eine Alternative zu schaffen, welche einen besonders einfachen und kostengünstigen Auf- und Umbau ermöglicht.

Diese Aufgabe wird durch eine Förderstrecke gemäß Patentanspruch 1 sowie eine Förderanlage nach Anspruch 12 und ein Verfahren zum Aufbau einer Förderstrecke nach Anspruch 14 gelöst. Erfindungsgemäß weist die Förderstrecke ein Bandtragegerüst mit zumindest zwei sich in einer Förderstreckenlängsrichtung verlaufenden Längsträgern und einer Anzahl quer, vorzugsweise rechtwinklig zur Förderstreckenlängsrichtung verlaufenden Traversen, also eine Art "Querträger", auf. Die Längsträger können sich beispielsweise seitlich, unterhalb oder oberhalb der Traversen befinden. Üblicherweise bzw. vorzugsweise handelt es sich bei den Längsträgern um seitliche Wangen, zwischen denen sich die Traversen erstrecken. Daher wird im Folgenden anstelle des Begriffs "Längsträger" auch der Begriff "Wange" synonym verwendet. Neben den genannten Traversen kann das Bandtragegerüst auch noch weitere Haupt-Querträger oder dergleichen aufweisen, um die Längsträger zusätzlich stabil zu verbinden.

Die Förderstrecke kann dabei alle Bauelemente einer Bandförderanlage umfassen, die das Förderband im beladenen oder unbeladenen Zustand zwischen einer Kopf- und Hecktrommel, von denen eine oder beide in der Regel zum Antrieb des Förderbands verwendet werden können, tragen und führen. Kopf- und Hecktrommel können dabei ggf. auch als Teile der Förderstrecke angesehen werden. Unter einen Förderband ist im Sinne der Erfindung jedes Fördermittel zu verstehen, welches wie ein Band in die Förderrichtung über die Bandunterstützungsmodule gezogen bzw. verschoben werden kann, also insbesondere Gliederbänder, Folien, Förderketten, PU-Bänder oder dergleichen. Dabei ist auch eine Hin- und Herbewegung möglich, d. h. das Förderband kann auch beispielsweise im Revisierbetrieb genutzt werden.

Erfindungsgemäß weist die Förderstrecke zudem eine Anzahl von mit den Traversen gekoppelte, vorzugsweise jeweils einstückige, Bandunterstützungsmodule auf, die sich in der Förderstreckenlängsrichtung (d. h. in oder entgegen der Laufrichtung des Förderbandes) zwischen zumindest zwei Traversen erstrecken. Vorzugsweise erstrecken sich die Bandunterstützungsmodule dabei immer zwischen zwei direkt benachbarten Traversen. Es ist aber nicht ausgeschlossen, dass sich ein Bandunterstützungsmodul auch über eine oder mehrere Traversen hinweg zwischen zwei nicht direkt benachbarten Traversen erstreckt. Diese Bandunterstützungsmodule, d. h. Module bzw. Bauelemente zur Unterstützung des Bands, weisen jeweils eine im bestimmungsgemäßen Einsatz zu einem Förderband (also in der Regel nach oben) weisende Bandauflagefläche auf. Die Bandunterstützungsmodule sind dabei erfindungsgemäß im Wesentlichen in einem Spritzgussverfahren hergestellt, d. h. es handelt sich um Spritzgussteile. Der Begriff "im Wesentlichen" ist dabei so zu verstehen, dass die Hauptkomponente, vorzugsweise das komplette Bandunterstützungsmodul, im Spritzgussverfahren hergestellt ist. Ausgeschlossen ist aber nicht, dass Zusatzbauteile an dem Bandunterstützungsmodul aus einem anderen Material oder mittels eines anderen Verfahrens hergestellt sein können, wenn das Bandunterstützungsmodul nicht einstückig sein sollte. Aus Kostengründen ist aber immer die einstückige Herstellung als einzelnes Spritzgussteil bevorzugt. Beispielsweise könnten aber auch Metalleinsätze, wie z. B. Gewindebuchsen, Steckstifte oder dergleichen, gleich im Spritzgussverfahren mit in das Bandunterstützungsmodul eingespritzt sein.

Bei dem entsprechenden erfindungsgemäßen Verfahren zum Aufbau einer Förderstrecke wird also zunächst ein Bandtragegerüst mit zumindest zwei sich in einer Förderstreckenlängsrichtung verlaufenden Längsträgern und einer Anzahl quer zur Förderstreckenlängsrichtung verlaufenden Traversen aufgestellt. Es wird dann eine Bandunterstützung am Bandtragegerüst erstellt, indem eine Anzahl von im Wesentlichen in einem Spritzgussverfahren hergestellten Bandunterstützungsmodulen mit den Traversen gekoppelt wird, so dass sich die Bandunterstützungsmodule in Förderstreckenlängsrichtung zwischen zumindest zwei Traversen erstrecken, wobei die Unterstützungsmodule jeweils eine im bestimmungsgemäßen Einsatz zu einem Förderband weisende Bandauflagefläche aufweisen.

Wie insbesondere später anhand der Vielzahl von möglichen Ausführungsbeispielen noch deutlich wird, ermöglicht dieser modulartige Aufbau eine besonders große Flexibilität. Durch die Herstellung der Bandunterstützungsmodule in einem Spritzgussverfahren mit einer zu einem Förderband weisenden Bandauflagefläche wird weiterhin der Aufwand reduziert, indem auf die Bandunterstützungsmodule nicht noch zusätzliche Gleitelemente oder dergleichen anmontiert werden müssen. Insgesamt ist der Aufbau somit erheblich kostengünstiger als der bisherige Aufbau von Förderstrecken. Die Bandauflagefläche dient dabei dazu, das Band über eine im Verhältnis zu den bisherigen dünnen Schienen oder Stegen relativ große Breite (quer zur Förderstreckenlängsrichtung) zu unterstützen. Beispielsweise beträgt die Breite der Bandauflagefläche bei einer bevorzugten Variante mindestens 5 cm, besonders bevorzugt mindestens 8 cm, wogegen die bisherigen Schienen nur eine Breite von ca. maximal 2 cm aufweisen. Die Unterstützung des Förderbands ist also zudem noch besser als bei den bisherigen Anlagen.

Eine erfindungsgemäße Förderanlage umfasst dabei eine erfindungsgemäße Förderstrecke sowie ein geeignetes Förderband, welches zumindest bereichsweise auf den Bandunterstützungsmodulen der Förderstrecke aufliegt.

Die erfindungsgemäße Förderstrecke umfasst zudem auch geeignete Bandunterstützungsmodule für eine solche Förderstrecke. Ein solches Bandunterstützungsmodul weist, wie zuvor beschrieben, einen Grundkörper mit einer im bestimmungsgemäßen Einsatz zu einem Förderband weisenden Bandauflagefläche auf. Zudem hat das Bandunterstützungsmodul eine von der Bandauflagefläche abgewandte Unterseite, zwei jeweils die Transportauflagefläche und die Unterseite verbindende (im bestimmungsgemäßen Einsatz in Förderstreckenlängsrichtung verlaufende) Längsseiten sowie zwei jeweils die Transportauflageseite und die Unterseite verbindende (quer zur Förderstreckenlängsrichtung verlaufende) Stirnseiten. Außerdem muss das Bandunterstützungsmodul geeignete Kupplungs- bzw. Kopplungselemente zur Verkopplung mit den Traversen aufweisen. Dieses Transportunterstützungsmodul ist wie beschrieben, vorzugsweise einstückig, im Wesentlichen als Spritzgusselement hergestellt. Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und Merkmale verschiedener Ausführungsbeispiele zu neuen Ausführungsbeispielen kombiniert werden können, auch wenn diese Kombination nicht explizit genannt ist.

Erfindungsgemäß weisen die Bandunterstützungsmodule jeweils eine Anzahl von Kopplungselementen auf, um die Bandunterstützungsmodule an den Traversen lösbar zu fixieren. Vorzugsweise erfolgt die Fixierung (und auch das Lösen) mittels der Kopplungselemente werkzeuglos. Bei einer besonders bevorzugten Variante befinden sich diese Kopplungselemente an zwei in Förderstreckenlängsrichtung vorne und hinten am jeweiligen Bandunterstützungsmodul angeordneten Stirnseiten.

Zur werkzeuglosen lösbaren Fixierung umfassen die Kopplungselemente jeweils vorzugsweise Klemm- und/oder Rastelemente. Das heißt, insbesondere können die Kopplungselemente als Clips ausgebildet sein, so dass sich die Bandunterstützungsmodule auf die Traversen aufclipsen lassen.

Insbesondere wenn es sich um Traversen handelt, die zumindest abschnittsweise zylinderförmig ausgebildet sind, beispielsweise einfache Traversen in Form von Rundstangen oder Rundrohren, weisen die Kopplungselemente bevorzugt jeweils eine U-förmige Aufnahme für einen Abschnitt einer Traverse auf. Bei eckigen Querschnitten können entsprechend passende Formen der Aufnahmen gewählt werden.

Besonders bevorzugt ist die offene U-Seite der Aufnahmen der Kopplungselemente an einer der beiden Stirnseiten zu einer Unterseite des Bandunterstützungsmoduls gerichtet, d. h. die U-förmige Aufnahme ist zu der zur Transportbandauflageseite abgewandten Unterseite hin offen. Vorzugsweise ist die offene U-Seite der Aufnahmen der Kopplungselemente an einer weiteren der Stirnseiten des Bandunterstützungsmoduls in die Förderstreckenlängsrichtung gerichtet, d. h. die U-förmige Aufnahme ist zu der Förderstreckenlängsrichtung hin offen. Beispielsweise kann, wie dies später noch anhand der Figuren erläutert wird, das Bandunterstützungsmodul zunächst mit den Kopplungselementen, welche in Förderstreckenlängsrichtung die offene U-Seite aufweisen, an einer ersten Traverse aufgeclipst werden. Anschließend kann das Bandunterstützungsmodul um eine durch diese erste Traverse gebildete Achse heruntergeschwenkt werden und so an der anderen Stirnseite mit den nach unten offenen Aufnahmen auf eine zweite, z. B. benachbarte Traverse aufgeclipst werden.

Diese Befestigungstechnik ist insbesondere auch deswegen bevorzugt, weil in vielen Förderstrecken ohnehin entsprechende Rundstangen oder Rundrohre als Traversen eingesetzt werden, da diese als Stangenware besonders günstig sind. Zudem gibt es standardisierte Wangen und entsprechende Traversen zum Aufbau von Rollenbahnen, bei denen diese zylinderförmigen Traversen als Achslager für die Transportrollen dienen, als Alternativen zu einem Bandförderer.

In einer bevorzugten Variante sind die Kopplungselemente an den Stirnseiten der Bandunterstützungsmodule jeweils derart ausgebildet, dass zwei in Förderstreckenlängsrichtung hintereinander angeordnete Bandunterstützungsmodule an derselben Traverse befestigt, beispielsweise aufgeclipst werden können. Hierzu können an den Stirnseiten beispielsweise die Kopplungselemente so ausgebildet sein, dass sie zahnförmig bzw. nut- und federartig oder dergleichen ineinandergreifen.

Ganz besonders bevorzugt sind die Kopplungselemente an den gegenüberliegenden Stirnseiten (bezüglich der Bandauflagefläche) zueinander punktsymmetrisch zu einem auf der Bandauflagefläche des Bandunterstützungsmoduls liegenden Mittelpunkt angeordnet. Das heißt, bezogen auf eine Projektion senkrecht zur Normalen auf der Transportauflageseite liegen die Kopplungselemente an den Stirnseiten sich jeweils punktsymmetrisch gegenüber. Auf diese Weise ist es möglich, benachbarte Kopplungselemente immer auf derselben Traverse anzukoppeln, unabhängig von der Orientierung, d. h. unabhängig davon, welche der Stirnseiten gerade in Transportbandbewegungsrichtung vorne oder hinten liegt.

Ebenso ist es bevorzugt, wenn die Kopplungselemente des Bandunterstützungsmoduls, die zur Kopplung mit zwei beabstandeten Traversen dienen, in der Förderstreckenlängsrichtung in einem vorgegebenen Rasterabstand voneinander beabstandet sind. Als Rasterabstand wird dabei der Abstand zwischen den Mittelpunkten der Kopplungselemente, insbesondere den U-förmigen Ausnehmungen zur Aufnahmen der Traversen, angesehen. Dieser Rasterabstand beträgt besonders bevorzugt ein Vielfaches eines Basis-Rasterabstands von ca. 55 mm.

Vorzugsweise umfasst ein Modulsystem, welches eine Mehrzahl von Bandunterstützungsmodulen aufweist, mindestens zwei verschiedene Typen von Standard-Bandunterstützungsmodulen mit unterschiedlichen Rasterabständen, wobei sich diese beiden Standard-Bandunterstützungsmodule um genau einen Basis-Rasterabstand, von vorzugsweise ca. 55 mm, unterscheiden. Besonders bevorzugt wird beispielsweise ein Standard-Bandunterstützungsmodul mit einem Rasterabstand von ca. 55 mm x 4 = 220 mm zwischen den Kopplungselementen und ein weiteres Standard-Bandunterstützungsmodul mit einem Rasterabstand von ca. 55 mm x 3 = 165 mm genutzt.

Ein solches Modulsystem mit zwei Typen von Standard-Bandunterstützungsmodulen, deren Rasterabstand jeweils ein unterschiedliches Vielfaches eines Basis-Rasterabstands aufweisen und sich dabei besonders bevorzugt nur um einen Basis-Rasterabstand unterscheiden, hat den Vorteil, dass allein mit diesen beiden Typen von Bandunterstützungsmodulen nahezu jede Förderstrecke nahtlos mit Bandunterstützungsmodulen belegbar ist.

Wie bereits eingangs erwähnt, sind die Längsträger in der Regel als zwei seitliche Wangen ausgebildet, zwischen denen sich die Traversen erstrecken. Sofern sich diese Wangen weit genug nach oben über die Traversen hinweg erstrecken, können sie gleichzeitig als seitliche Führungsschienen für die zu transportierenden Güter, beispielsweise die Transportkisten, verwendet werden. Zwischen diesen Wangen verbleibt dann ein lichtes Maß, welches den Bereich vorgibt, in dem sich die Güter bzw. Kisten evtl. in Querrichtung verschieben können.

Insbesondere beim Aufbau einer solchen Förderstrecke sind die Bandunterstützungsmodule bevorzugt so ausgebildet, dass ihre Breite (quer bzw. rechtwinklig zur Förderstreckenlängsrichtung) geringer als das lichte Maß zwischen den Wangen ist. Vorzugsweise beträgt die Breite maximal die Hälfte des lichten Maßes, d. h. dass beispielsweise mindestens zwei derartige Bandunterstützungsmodule nebeneinander auf den Traversen befestigt werden können, um z. B. weitgehend die komplette Fläche zwischen den Wangen als Bandunterstützung auszubilden. Ganz besonders bevorzugt beträgt die Breite der Bandunterstützungsmodule im Wesentlichen einen Teiler des lichten Maßes, d. h. beispielsweise einhalb, ein Drittel, ein Viertel, ein Sechstel, ein Achtel etc., so dass immer eine entsprechende Anzahl von Bandunterstützungsmodulen parallel nebeneinander in die Förderstrecke eingelegt werden, um wieder eine vollflächige Unterstützung über nahezu die komplette Breite zwischen den Wangen zu erhalten. Der Begriff "im Wesentlichen" ist hierbei so zu verstehen, dass Toleranzen bzw. ein gewisses Spiel zwischen den einzelnen parallel angeordneten Bandunterstützungsmodulen und/oder zu den Wangen rechts und links berücksichtigt werden müssen. Ganz besonders bevorzugt beträgt die Breite im Wesentlichen ein Viertel oder ein Drittel des Abstands bzw. des lichten Maßes zwischen den Wangen.

Die Ausbildung der Bandunterstützungsmodule mit einer Breite, welche maximal die Hälfte des lichten Maßes zwischen den Wangen beträgt, erlaubt einen noch flexibleren Einsatz der Bandunterstützungsmodule und ist daher auch als eigenständige Idee wertvoll, selbst wenn die Bandunterstützungsmodule nicht im Wesentlichen als Spritzgussteile hergestellt werden. Besonders vorteilhaft ist selbstverständlich die Kombination der Merkmale mit den oben beschriebenen einzelnen Merkmalen oder Merkmalskombinationen der Bandunterstützungsmodule.

Bei einer weiter bevorzugten Variante weist die Förderstrecke in einem parallel zu den Bandunterstützungsmodulen in Förderstreckenlängsrichtung verlaufenden Streifen des Bandtragegerüsts, d. h. in einem neben dem Förderband längs laufenden parallelen Bereich, Transportrollen auf. Dies hat den Vorteil, dass insbesondere bei breiteren Gütern, beispielsweise den Transportkisten, ein Teil des Gewichts auf Transportrollen verlagert werden kann, was zu einer Energieersparnis führt. Während nämlich im Bereich des Förderbands die Gleitreibung mit einem Reibungsfaktor von 0,3 wirkt, ist der Reibfaktor bei Rollreibung nur 0,01. Wird also ein Teil des Gewichts einer befüllten Kiste auf parallel neben dem Förderband angeordnete Rollen verlagert (parallel heißt hier, dass die Rotationsachsen senkrecht zur Förderstreckenlängsrichtung stehen und die Förderrichtung auf den Transportrollen parallel zur Förderstreckenlängsrichtung verläuft), kann folglich erheblich Energie eingespart werden.

Diese Transportrollen können in beliebiger Weise auf geeigneten, quer zur Förderstreckenlängsrichtung verlaufenden Achsen angeordnet sein, beispielsweise an Achsstummeln, die an einer der beiden Wangen befestigt sind. Bei einer besonders bevorzugten Variante sind sie auf den Traversen rotierbar gelagert, die auch dazu benutzt werden, um die Bandunterstützungsmodule in der Förderstrecke zu befestigen.

Bei einer erfindungsgemäßen Förderanlage ist in diesem Fall bevorzugt dafür gesorgt, dass die Höhe der Bandunterstützungsmodule über den Traversen und die Dicke des Transportbands so gewählt sind, dass eine Objektauflageseite des auf den Bandunterstützungsmodulen aufliegenden Transportbands sich in einer Ebene mit der höchsten Stelle der Transportrollen, d. h. einer oberen Tangente am Umfang der Transportrollen, befindet. Mit anderen Worten, die durch die Transportrollen gebildete Transportoberfläche liegt in der gleichen Ebene wie die durch das Transportband gebildete Transportoberfläche. Sofern die Transportrollen selbst auf den Traversen rotierbar gelagert sind, wie dies zuvor beschrieben wurde, sind hierzu die Höhe der Bandunterstützungsmodule und die Dicke des Transportbands also entsprechend einem Durchmesser der Transportrollen gewählt, wobei als Höhe des Bandunterstützungsmoduls der Abstand der Bandauflageseite von der Symmetrieachse der Traversen angesehen wird.

Um die Flexibilität noch weiter zu erhöhen, sind die Bandunterstützungsmodule und/oder die Transportrollen in Längsrichtung der Traversen verschiebbar an den Traversen gehalten. Besonders bevorzugt werden sie dann mittels auf den Traversen angeordneter fixierbarer Ringe gegen eine Verschiebung in Längsrichtung der Traversen gesichert. Diese fixierbaren Ringe sind zur Montage ebenfalls in Längsrichtung verschiebbar, werden im Betrieb aber fix auf den Traversen gehalten, entweder, indem sie als selbstklemmende Klemmringe ausgebildet sind, die nur mit entsprechend starkem Kraftaufwand in Längsrichtung verschiebbar sind, oder als festklemmbare Stellringe, welche beispielsweise mit einer Madenschraube oder dergleichen auf den Traversen festgehalten werden können und nach Lösen dann in Längsrichtung verschiebbar sind, um die Transportrollen und/oder Bandunterstützungsmodule an dem gewünschten Ort festzuklemmen.

Da die Transportunterstützungsmodule ja bevorzugt so ausgebildet sind, dass die Kupplungselemente von benachbarten Transportunterstützungsmodulen zahnartig oder dergleichen ineinandergreifen und somit die Transportunterstützungsmodule nur gemeinsam in Längsrichtung der Traversen verschoben werden können, reicht es auch aus, wenn die Transportunterstützungsmodule nur an einigen der Traversen mit Hilfe solcher fixierbarer Ringe gegen eine Verschiebung in Längsrichtung der Traversen gesichert werden.

Wie bereits oben erwähnt, soll besonders bevorzugt eine breite Bandauflagefläche für das Förderband zur Verfügung gestellt werden. Andererseits sollten aber die Reibungskraft und der Abrieb zwischen Förderbandunterseite und Bandunterstützungsmodul so gering wie möglich gehalten werden. Zudem ist, insbesondere bei Förderanlagen im Bereich der Lebensmittelindustrie bzw. Lebensmitteldistribution, eine leichte Reinigung sämtlicher Anlagen besonders wünschenswert. Daher ist bei einer bevorzugten Variante die Bandauflagefläche so ausgebildet, dass sie eine Lochstruktur aufweist. Ganz besonders bevorzugt ist sie als wabenähnliche Struktur ausgebildet. In diesem Fall ist es auch möglich, die Förderstrecken leicht von unten mit einem Hochdruckreiniger oder dergleichen zu reinigen. Zudem ist trotz der Breite der Auflagefläche insgesamt nicht immer an allen Punkten ein Kontakt zwischen dem Förderband gegeben, was den Abrieb reduziert.

Um dafür zu sorgen, dass die Reibung über die Querrichtung, d. h. über die Breite des Förderbands, möglichst gleichmäßig verteilt ist, ist das Lochmuster entsprechend strukturiert verteilt ausgebildet, also nicht z. B. nur mit Löchern, die in einfachen Reihen in Förderstreckenlängsrichtung liegen, sondern z. B. quer zur Förderstreckenlängsrichtung laufenden Lochreihen, die jeweils gegeneinander quer zur Förderstreckenlängsrichtung versetzt sind. Bei einer Wabenstruktur kann beispielsweise dieser Effekt verbessert werden, indem einige der Wabenstege nicht in Förderstreckenlängsrichtung, sondern unter einem leichten Anstellwinkel hierzu verlaufen. Die Wabenstruktur ist also besonders bevorzugt zumindest teilweise asymmetrisch.

Um den Abrieb kontrollieren zu können, um beispielsweise rechtzeitig für einen Austausch der Bandunterstützungsmodule zu sorgen, weisen diese an oder in der Bandauflagefläche bevorzugt Marker beispielsweise unterschiedlich starke Vertiefungen auf.

Eine Alternative oder zusätzliche Möglichkeit, die Reibung zwischen Förderband und Bandunterstützungsmodulen zu verringern, besteht darin, wenn in den Bandunterstützungsmodulen integrierte Förderbandunterstützungsrollen enthalten sind. Beispielsweise können die Bandunterstützungsmodule jeweils Ausnehmungen oder dergleichen aufweisen, und in diese Ausnehmungen können die Förderbandunterstützungsrollen eingelegt werden, so dass die obere Tangente an den Förderbandunterstützungsrollen sehr knapp oberhalb der Bandunterstützungsmodule liegt. In diesen Ausnehmungen können auch bereits Lager integriert sein, in denen beispielsweise geeignete Achsstummel an den Förderbandunterstützungsrollen gelagert werden.

Insbesondere wenn das Förderband nur in einem Teilbereich des Bandtragegerüsts, beispielsweise nur in einem halben oder viertel Abschnitt zwischen den Wangen, verlaufen soll, ist es vorteilhaft, wenn die Bandunterstützungsmodule oder zumindest ein Teil der Bandunterstützungsmodule zumindest an einer in Förderstreckenlängsrichtung verlaufenden Längsseite ein sich nach oben über die Bandauflagefläche herausragendes Bandführungselement aufweisen, das bevorzugt gleich bei der Herstellung des Bandunterstützungsmoduls mit angespritzt wird. Besonders bevorzugt kann es sich hierbei um eine durchgehende integrierte Bandführungskante handeln.

Wird beispielsweise die Förderstrecke so aufgebaut, dass nur auf einer Hälfte oder einem Viertel ein Förderband verwendet wird und in dem restlichen freien Streifen Transportrollen angeordnet werden, so können beispielsweise die Bandunterstützungsmodule so angeordnet werden, dass sie jeweils auf den zu den Rollen weisenden Streifen die Bandführungselemente bzw. die Bandführungskante aufweisen und dann zwischen einer Wange und der Bandführungskante bzw. den Bandführungselementen der Bandunterstützungsmodule geführt werden. Wenn gewünscht wird, dass die Bandunterstützungsmodule (in Querrichtung des Bandtragegerüsts bzw. der Förderstrecke) mehr in einem mittleren Bereich angeordnet sein sollen, können beispielsweise auch einzelne Bandunterstützungsmodule oder jedes zweite Bandunterstützungsmodul mit den Stirnseiten verdreht angeordnet sein, so dass die Bandführungselemente bzw. Bandunterstützungskanten mal rechts und mal links angeordnet sind. So ist eine sichere Führung des Förderbands auf den Bandunterstützungsmodulen gewährleistet.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine perspektivische Ansicht auf einen Abschnitt eines ersten Ausführungsbeispiels einer erfindungsgemäßen Förderstrecke (ohne Förderband),
Figur 2 eine perspektivische Ansicht eines ersten Ausführungsbeispiels eines Bandunterstützungsmoduls, wie es in einer Förderstrecke gemäß Figur 1 eingesetzt ist,
Figur 3 eine seitliche Ansicht auf das Bandunterstützungsmodul gemäß Figur 2 beim Einclipsen auf die Traversen,
Figur 4 eine Draufsicht auf zwei in Förderstreckenlängsrichtung benachbarte Bandunterstützungsmodule gemäß einem Ausführungsbeispiel, jedoch mit unterschiedlichen Längen,
Figur 5 eine Frontansicht auf den Abschnitt der Förderstrecke gemäß Figur 1 (jetzt mit Förderband),
Figur 6 eine perspektivische Ansicht auf einen Abschnitt einer Förderanlage mit einer weiteren Variante einer erfindungsgemäßen Förderstrecke,
Figur 7 eine perspektivische Ansicht auf einen Abschnitt einer Förderanlage mit einer weiteren Variante einer erfindungsgemäßen Förderstrecke.

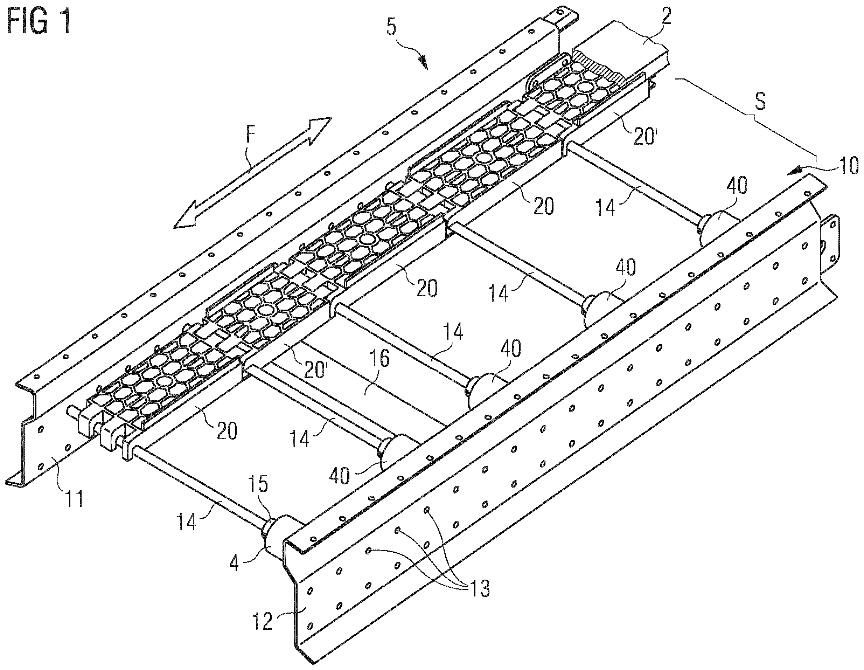

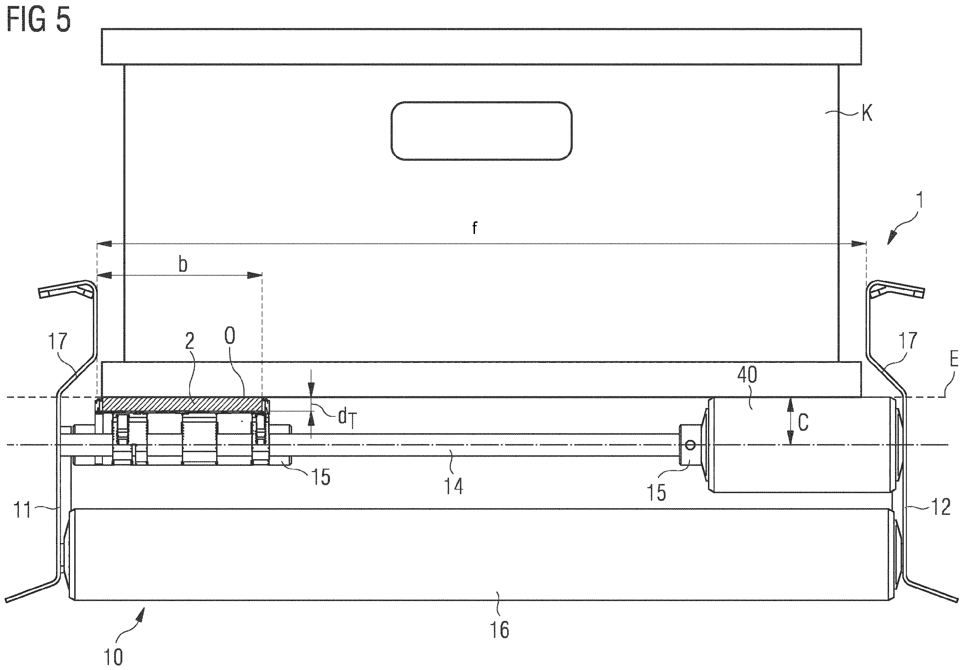

In Figur 1 ist ein relativ kurzer Abschnitt einer Förderstrecke 5 dargestellt. Im vorliegenden Fall handelt es sich um eine Förderstrecke 5, welche bevorzugt zum Transport von Transportkisten K (siehe Figur 5) im Bäckerei- oder Fleischereibereich dient.

Diese Förderstrecke weist zwei Wangen 11, 12 als Längsträger 11, 12 auf, zwischen denen sich in regelmäßigen Abständen quer zur Förderstreckenlängsrichtung F verlaufende Traversen 14 in Form von Rundrohren erstrecken. Zusätzlich sind die beiden Wangen 11, 12 durch ebenfalls quer zur Förderstreckenlängsrichtung F verlaufende Haupt-Querträger 16 (hier ist nur einer dargestellt) noch einmal in einem weiter unten liegenden Bereich unterhalb der Traversen 14 fest miteinander verbunden. Diese Haupt-Querträger 16 verbinden die Wangen 11, 12 in größeren Abständen als die Traversen 14. Die Traversen 14 sind hier immer in einem Vielfachen eines definierten Basis-Rasterabstands von hier ca. 55 mm angeordnet, welcher durch vorgebohrte Löcher 13 in den Wangen festgelegt ist. Dabei gibt es bei dem in Figur 1 dargestellten Ausführungsbeispiel zwei mögliche Abstände von Traversen 14, nämlich einmal den vierfachen Abstand des Basis-Rasterabstands, d. h. einen Rasterabstand von insgesamt ca. 220 mm, und einen dreifachen Basis-Rasterabstand, nämlich eine Länge von ca. 165 mm. Auf diese Traversen 14 sind Bandunterstützungsmodule 20, 20' aufgeclipst.

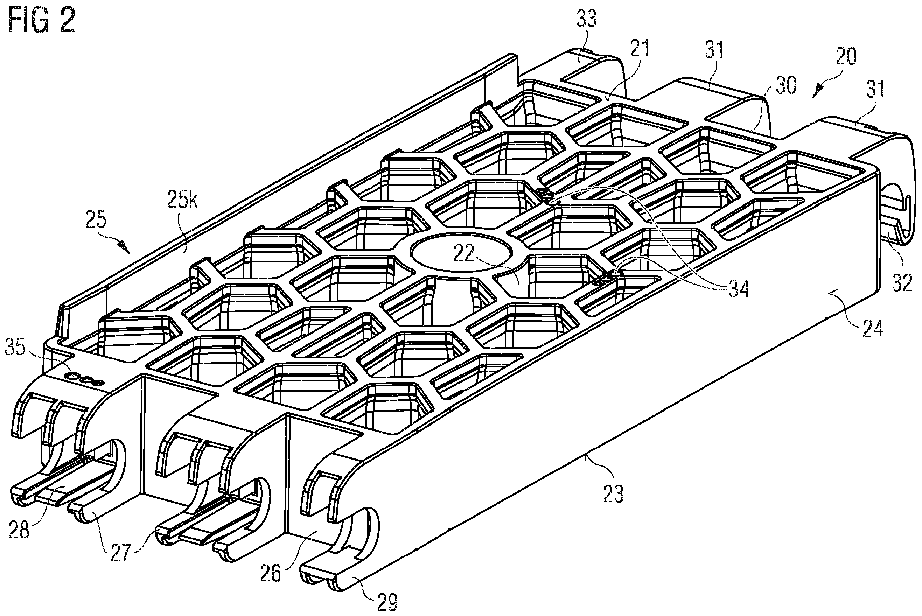

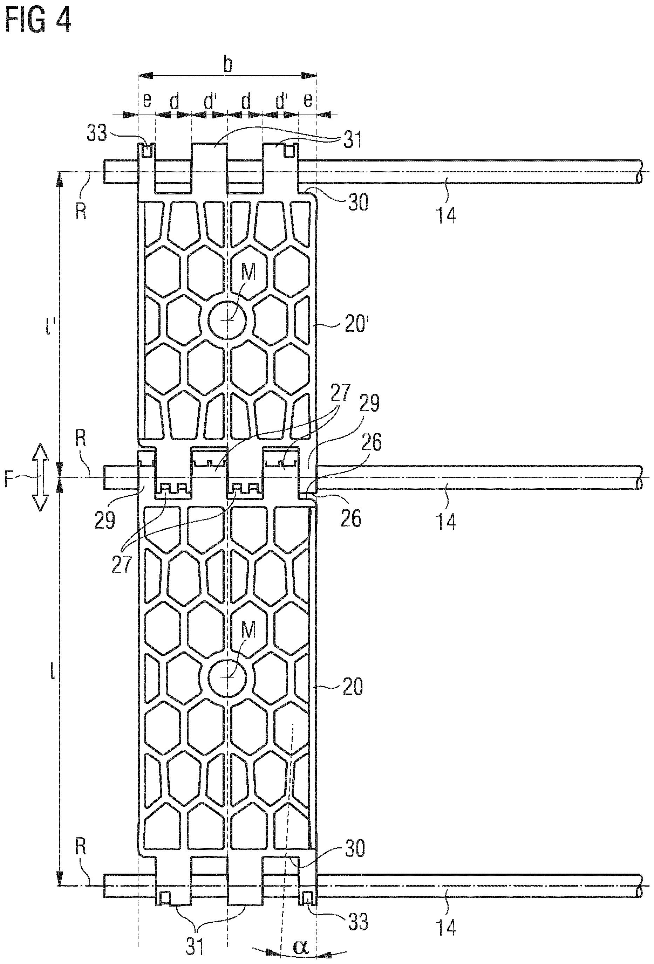

Die Figuren 2 bis 4 zeigen solche Bandunterstützungsmodule 20, 20' im Detail, einmal in perspektivischer Ansicht, einmal aus einer Seitenansicht und einmal von oben. Die Figur 4 zeigt dabei die ersten beiden in Figur 1 hintereinander gekoppelten Bandunterstützungsmodule 20, 20' in einer direkten Draufsicht, wie sie auf die Traversen 14 aufgesteckt sind. Figur 5 zeigt zusätzlich eine Frontansicht auf den Aufbau in Figur 1 (jedoch mit Förderband 2), d. h. einen Querschnitt durch eine Förderanlage 1 mit der Förderstrecke 5 gemäß Figur 1.

Wie aus diesen Figuren zu ersehen ist, weisen die Bandunterstützungsmodule 20, 20' jeweils einen Grundkörper mit einer Bandauflagefläche 21 auf, welche im bestimmungsgemäßen Einsatz nach oben weist und auf die das Förderband 2 (in Figur 4 zu sehen) aufgelegt wird. Die von der Bandauflagefläche 21 weg weisende, im bestimmungsgemäßen Einsatz nach unten weisende Seite wird hier als Unterseite 23 des Bandunterstützungsmoduls 20, 20' bezeichnet. Die Transportbandauflagenseite 21 und die Unterseite 23 des Grundkörpers der Bandunterstützungsmodule 20, 20' werden jeweils durch zwei in Förderstreckenlängsrichtung F verlaufende Längsseiten 24, 25 und in Förderstreckenlängsrichtung F vorne und hinten jeweils durch zwei Stirnseiten 26, 30 verbunden. Der Grundkörper hat eine Höhe von vorzugsweise mindestens 15 mm, besonders bevorzugt von ca. 29 mm.

An den Stirnseiten 26, 30 befinden sich jeweils Kopplungselemente 27, 29, 31, 33, die jeweils eine U-förmige Aufnahme für einen Abschnitt der zylindrischen Traversen 14 aufweisen. Das heißt, der Innendurchmesser dieser U-förmigen Aufnahme ist etwas größer als der oder gleich dem Außendurchmesser der Traversen 14.

Dabei befinden sich auf beiden Seiten Kopplungselemente 27, 29, 31, 33 in verschiedenen Breiten, nämlich zwei dickere Kopplungselemente 27, 31 und ein schmaleres Kopplungselement 29, 33. Die Kopplungselemente auf den sich gegenüberliegenden Stirnseiten sind dabei so angeordnet bzw. zueinander versetzt, dass sie bezüglich der Bandauflagefläche 21, d. h. von oben betrachtet, punktsymmetrisch zu einem auf der Bandauflagefläche 21 des Bandunterstützungsmoduls 20, 20' liegenden Mittelpunkt M angeordnet sind. Dies ist in der Draufsicht in Figur 4 besonders gut zu ersehen. Dies ermöglicht es insbesondere unabhängig von der Orientierung der Stirnseiten, benachbarte Bandunterstützungsmodule 20, 20' auf der gleichen Traverse 14 festzukoppeln und dabei die Kopplungselemente 27, 29, 31, 33 ineinander zu verzahnen.

Die Gesamtbreite b der Transportunterstützungsmodule 20, 20', welche hier ca. 9,5 mm beträgt, teilen sich die Kopplungselemente 27, 29, 31, 33 so auf, dass sich jeweils an einer Längskante zunächst ein schmaleres Kopplungselement 29, 33 mit einer Breite e = ca. 9 mm befindet, und zwar diagonal versetzt. Entsprechend befindet sich an der anderen Seite ein Freiraum mit der entsprechenden Breite e = ca. 9 mm. Neben dem schmaleren Kopplungselement 33, 29 befindet sich dann zunächst ein Freiraum mit einer Breite d = ca. 19 mm, dem sich dann ein breiteres Kopplungselement 27, 31 mit ebenfalls der Breite d' = ca. 18 mm anschließt, dann ein weiterer Freiraum mit der Breite d = ca. 19 mm und schließlich ein weiteres Kopplungselement 27, 31, ebenfalls mit der Breite d' = ca. 18 mm.

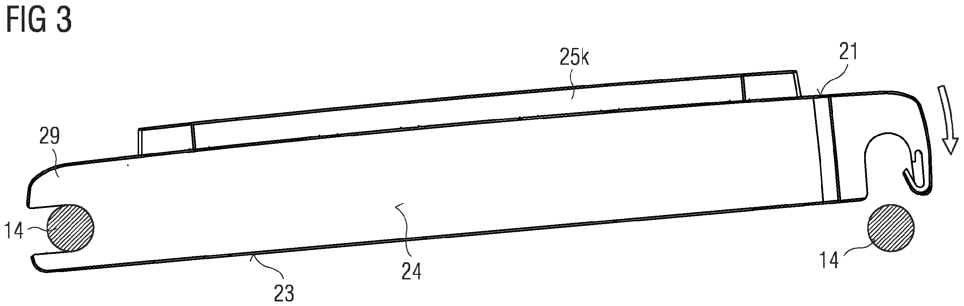

Die Kopplungselemente 27, 29 an der einen Stirnseite 26 unterscheiden sich jedoch von den Kopplungselementen 31, 33 an der anderen Stirnseite 30 dadurch, dass die U-Öffnung der U-förmigen Aufnahme anders orientiert ist. Während an der einen Stirnseite 26 die Kopplungselemente 27, 29 jeweils die U-Öffnung in der Transportstreckenlängsrichtung aufweisen, weisen die U-Öffnungen der Kopplungselemente 31, 33 an der anderen Stirnseite 30 nach unten hin, d. h. zur Unterseite 23. Durch diese Konstruktion können die einzelnen Bandunterstützungsmodule 20, 20', wie dies in Figur 3 gezeigt ist, zunächst mit der ersten Stirnseite 26 mit den Kopplungselementen 27, 29, welche die U-Öffnung in Transportstreckenlängsrichtung F aufweisen, auf eine Traverse 14 aufgesteckt werden und anschließend um die dadurch gebildete Drehachse nach unten geschwenkt und auf die andere, benachbarte Traverse 14 von oben aufgesteckt werden.

Die Kopplungselemente 27 weisen jeweils Klemmelemente 28 in Form von federnden Zungen auf, um die jeweiligen Kopplungselemente auf der Traverse 14 aufzuclipsen. Entsprechend weisen die Kopplungselemente 31, 33 auf der anderen Seite zungenförmige Klemmelemente 32 auf, welche ebenfalls ein Einclipsen auf der Traverse 14 möglichst spielfrei ermöglichen. Auf diese Weise werden die Bandunterstützungsmodule 20. 20' sicher auf den Traversen 14 gehalten und können nur mit entsprechendem Kraftaufwand wieder entfernt werden, wobei keinerlei Werkzeuge benötigt werden, weder zur Befestigung noch zum Abnehmen der Bandunterstützungsmodule 20, 20' auf den Traversen 14. Allerdings sind die Transportunterstützungsmodule dann noch relativ leicht in Längsrichtung der Traversen 14 verschiebbar.

Wie aus den Figuren 2 und 3 besonders gut erkennbar ist, weisen die Bandunterstützungsmodule 20, 20' an einer Längsseite 25 eine sich nach oben über die Bandauflagefläche 21 bzw. den Grundkörper des Bandunterstützungsmoduls 20, 20' hinaus erstreckende Führungskante 25K auf. Die Höhe der Kante ist vorzugsweise so, dass sie knapp unterhalb der Oberfläche des Transportbands endet. Sie beträgt hier ca. 7 mm für ein Kunststoffgliederband von ca. 10 mm Dicke. Diese kann dazu dienen, ein auf der Bandauflagefläche 21 aufliegendes Band seitlich zu führen.

Die Bandauflagefläche 21 bzw. der Grundkörper ist mit einer Lochstruktur versehen. Hier ist der Grundkörper als Wabenstruktur aufgebaut, so dass sich diese Lochstruktur in der Bandauflagefläche 21 ergibt. Auch dies ist besonders gut aus der Draufsicht in Figur 4 zu ersehen. Wie hier auch zu erkennen ist, sind einige der Wabenstege so ausgebildet, dass sie nicht parallel zur Förderstreckenlängsrichtung F, sondern unter einem kleinen Anstellwinkel (siehe hier der Winkel α für den rechten Steg in der zweituntersten Reihe in Figur 4) hierzu versetzt verlaufen. D. h. die Wabenstruktur ist teilweise asymmetrisch. Dabei können verschiedene Stege vorzugsweise unter verschiedenen Winkeln verlaufen. Dies hat den Vorteil, dass die Reibung auf die Unterseite des auf den Bandunterstützungsmodulen 20, 20' aufliegenden Förderbands 2 quer zur Förderstreckenlängsrichtung F besser verteilt ist.

In der Bandauflagefläche 21 der Bandunterstützungsmodule 20, 20' befinden sich an verschiedenen Stellen Marker 34 in Form von unterschiedlich starken punktförmigen Vertiefungen, um den Abrieb zu kontrollieren. Sind diese Marker 34 nur noch teilweise oder nicht mehr erkennbar, so wurde die Bandauflagefläche entsprechend verschlissen und das betreffende Bandunterstützungsmodul 20, 20' sollte getauscht werden.

Die Lochstruktur, insbesondere Wabenstruktur, hat zudem den Vorteil einer hohen Stabilität des Bandunterstützungsmoduls 20, 20' bei relativ geringem Materialverbrauch und Gewicht. Zudem lässt sich eine solche Lochstruktur relativ gut reinigen. So kann die Förderstrecke 5 mit den eingesetzten Bandunterstützungsmodulen 20, 20' auch leicht von unten mit Hilfe von Dampfreinigern oder dergleichen abgespritzt werden.

Die Länge der Transportunterstützungsmodule 20, 20' ist jeweils an den Rasterabstand der Löcher 13 für die Traversen 14 in den Wangen 11, 12 angepasst. Dabei werden, wie hier bevorzugt, zwei Bandunterstützungsmodule 20, 20' eingesetzt, die nahezu gleichartig aufgebaut sind, aber unterschiedliche Längen I, I' (bzw. Rasterabstände) aufweisen. Dabei wird die Länge I, I' jeweils vom Abstand zwischen den Mittelachsen der U-förmigen Aufnahmen der Kopplungselemente 27, 29, 31, 33 an den gegenüberliegenden Stirnseiten 26, 30 des jeweiligen Bandunterstützungsmoduls 20, 20' gemessen. Dies entspricht dann genau den Achsabständen der Rotationsachsen R der gekoppelten Traversen 14. Das längere Bandunterstützungsmodul 20 weist eine Länge I auf, welche dem oben erwähnten vierfachen Basis-Rasterabstand von ca. 55 mm entspricht, d. h. einer Länge von ca. 220 mm. Das kürzere Bandunterstützungsmodule 20' weist eine Gesamtlänge I' von ca. 165 mm auf, was dem dreifachen Basis-Rasterabstand entspricht. Mit diesen beiden Typen von Bandunterstützungsmodulen 20, 20' es möglich, nahezu jede beliebige Länge einer Förderstrecke 10 nahtlos zu belegen.

Die Breite b eines bevorzugten Bandunterstützungsmoduls 20, 20' beträgt wie erwähnt ca. 9,5 mm. Dies entspricht im Wesentlichen einem Viertel des lichten Maßes f zwischen den Wangen 11, 12, was besonders gut in Figur 5 zu sehen ist. Dieses lichte Maß f bestimmt die maximale Breite der auf der Förderstrecke 5 zu transportierenden Güter. Wie aus Figur 5, aber auch Figur 1 zu ersehen ist, sind die Wangen 11, 12 hier so geformt, dass sie in einem Bereich oberhalb der Traversen 14 zweimal um ca. 45° abgekröpft sind, um so eine nach innen zu den Traversen 14 weisende Schulter zu bilden und die Seitenwandung ein wenig nach innen zu ziehen, wodurch sich einen Art Leitplanken für die Führung der Transportgüter ergeben, zwischen denen sich das lichte Maß f ergibt.

Wie aus den Figuren 1 und 5 ebenfalls zu ersehen ist, ist es bevorzugt, wenn in einem parallel zu dem Transportband bzw. den durch das Bandunterstützungsmodul definierten Bereich liegenden Streifen S zusätzlich Transportrollen 40 angeordnet sind, um auf dieser Seite das Transportgut zu unterstützen. Dies ist insbesondere dann möglich, wenn es sich um Transportgüter handelt, die sich, wie beispielsweise die Transportkisten K, fast über das komplette lichte Maß f zwischen den Wangen 11, 12 erstrecken.

Die Transportrollen 40 sind besonders vorteilhaft auf den Traversen 14 unmittelbar aufgesteckt, so dass die Traversen 14 gleichzeitig als Achsen für die Transportrollen 40 dienen. Dabei ist dafür gesorgt, dass der Radius r der Transportrollen 40 genau so groß ist wie die Höhe der Bandunterstützungsmodule 20, 20', gesehen von der Symmetrieachse bzw. der Längsachse der Traversen 14 zur Bandauflagefläche 21 zuzüglich der Dicke d_{T} des Förderbandes 2. Auf diese Weise ist dafür gesorgt, dass die Oberfläche O des Förderbandes 2 in einer Ebene E mit der Oberkante der Transportrollen 40 liegt, d. h. mit der an der Oberseite der Transportrollen 40 anliegenden Tangente.

Um die Transportunterstützungsmodule 20, 20' und somit auch das Transportband 2 einerseits und die Transportrollen 40 andererseits an ihrer Position in Längsrichtung der Traversen 14 zu halten, sind auf die Traverse 14 Klemmringe 15 aufgesteckt, welche an der Traverse 14 festgeklemmt werden können und welche die jeweiligen Transportunterstützungsmodule 20, 20' bzw. Transportrollen 40 gegen eine Längsverschiebung entlang der Traversen 14 sichern.

Bei dieser Konstruktion können also beispielsweise die Transportkisten K mit einer Seite auf das Transportband 2 aufgestellt werden, welches beispielsweise an den Umlenkrollen (nicht dargestellt) am Ende der Transportstrecke 5 angetrieben wird. Auf der anderen Seite werden sie auf den Transportrollen 40 gelagert, welche wie eine herkömmliche Rollenbahn wirken. Dies hat den Vorteil, dass der Energieaufwand reduziert wird, weil auf der Seite mit den Transportrollen 40 nur die Rollreibung und keine Gleitreibung wirkt.

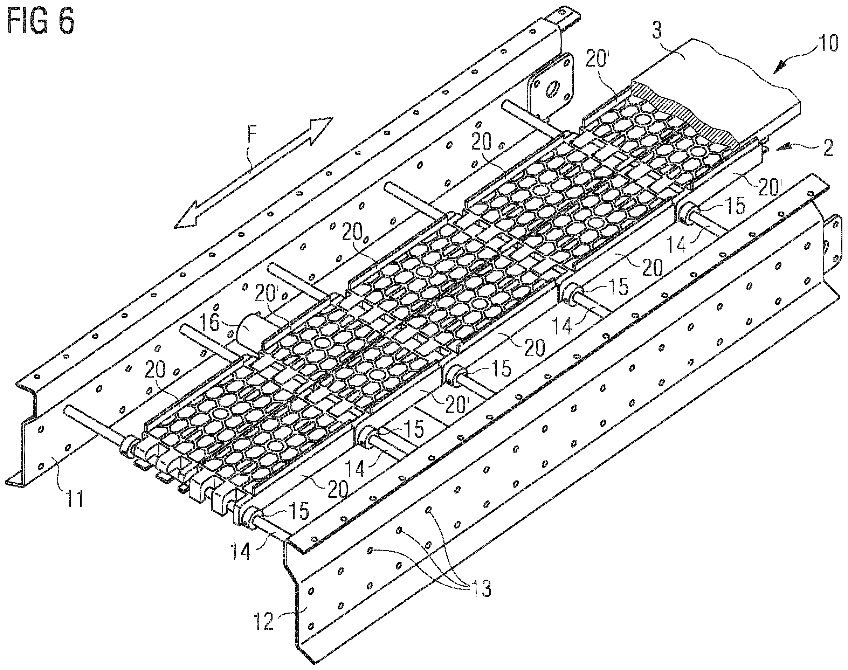

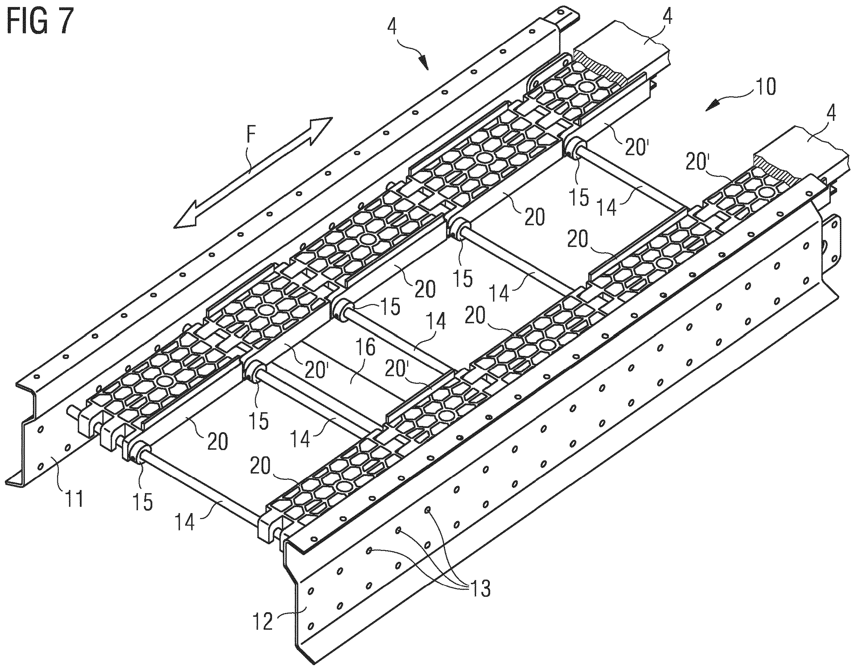

Mit den Bandunterstützungsmodulen 20, 20' ist es möglich, beliebige Förderstrecken 5 mit unterschiedlichen Bandbreiten und Konstruktionen von Rollen aufzubauen bzw. auch schon bestehende Förderstrecken leicht wieder umzurüsten oder umzubauen. Beispiele hierfür zeigen die Figuren 6 und 7. In Figur 6 ist in der Mitte der Förderstrecke eine relativ breite Bahn mit einem Förderband 3 aufgebaut. Hierzu wurden mittig jeweils zwei Streifen von Bandunterstützungsmodulen 20, 20' auf die Traversen 14 aufgeclipst und dann das Förderband 3 darübergelegt. In den Seitenbereichen bleiben jeweils freie Streifen, die wahlweise noch mit Transportrollen 40 versehen werden können. Figur 7 zeigt eine Variante, bei der entsprechende Streifen mit Transportunterstützungsmodulen 20, 20' und Transportbändern 4 an beiden Seiten jeweils eng benachbart zu den Wangen 11, 12 aufgebaut wurden und der mittlere Bereich frei bleibt.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können. Insbesondere ist es - wie oben beschrieben - möglich, beliebige Kombinationen von Förderstrecken mit Hilfe der Bandunterstützungsmodule aufzubauen. Weiterhin ist es selbstverständlich auch möglich, andere Strukturen als Wabenstrukturen zu verwenden, beispielsweise Strukturen mit kreisrunden Löchern oder rautenförmige Gitterstrukturen etc. Weiterhin schließt die Verwendung der unbestimmten Artikel "ein" bzw. "eine" nicht aus, dass die betreffenden Merkmale auch mehrfach vorhanden sein können. Ebenso schließen die Begriffe "Einheit" und "Modul" nicht aus, dass diese auch aus mehreren, gegebenenfalls auch räumlich getrennten, Untereinheiten bestehen.

### Bezugszeichenliste

1 Förderanlage
2 Förderband
3 Förderband
4 Förderband
5 Förderstrecke
10 Bandtragegerüst
11 Längsträger / Wange
12 Längsträger /Wange
13 Löcher
14 Traversen
15 Klemmringe
16 Haupt-Querträger
20 Bandunterstützungsmodul
20' Bandunterstützungsmodul
21 Bandauflagefläche
23 Unterseite
24 Längsseite
25 Längsseite
25K Führungskante
26 Stirnseite
27 Kopplungselement
28 Klemmelement
29 Kopplungselement
30 Stirnseite
31 Kopplungselement
32 Klemmelement
33 Kopplungselement
34 Marker / Vertiefungen
40 Transportrollen
E Ebene
F Förderstreckenlängsrichtung
K Transportkisten
M Mittelpunkt
O Oberfläche
R Rotationsachse
S Streifen
b Gesamtbreite
d Breite
d' Breite
e Breite
f lichtes Maß
I Länge / Rasterabstand
I' Länge / Rasterabstand
r Radius
d_{T} Dicke
α Anstellwinkel

## Patentansprüche

1. Förderstrecke (5) zum Transport von Objekten mittels eines Förderbands (2, 3, 4), mit zumindest
- einem Bandtragegerüst (10) mit zumindest zwei sich in einer Förderstreckenlängsrichtung (F) verlaufenden Längsträgern (11, 12) und einer Anzahl quer zur Förderstreckenlängsrichtung (F) verlaufenden Traversen (14),
- einer Anzahl von mit den Traversen (14) gekoppelten, vorzugsweise jeweils einstückigen, Bandunterstützungsmodulen (20, 20'), welche sich in der Förderstreckenlängsrichtung (F) zwischen zumindest zwei Traversen (14) erstrecken und jeweils eine im bestimmungsgemäßen Einsatz zu einem Förderband (2, 3, 4) weisende Bandauflagefläche (21) aufweisen, wobei die Bandunterstützungsmodule (20, 20') im Wesentlichen in einem Spritzgussverfahren hergestellt sind, wobei die Bandunterstützungsmodule (20, 20') jeweils eine Anzahl von Kopplungselementen (27, 29, 31, 33) aufweisen, um die Bandunterstützungsmodule (20, 20') an den Traversen (14) lösbar zu fixieren.

2. Förderstrecke nach Anspruch 1, wobei die Bandunterstützungsmodule (20, 20') an zwei in Förderstreckenlängsrichtung (F) vorne und hinten am jeweiligen Bandunterstützungsmodul (20, 20') angeordneten Stirnseiten (26, 30) jeweils eine Anzahl von Kopplungselementen (27, 29, 31, 33) aufweisen, um die Bandunterstützungsmodule (20, 20') jeweils, vorzugsweise werkzeuglos, an den Traversen (14) zu fixieren.

3. Förderstrecke nach Anspruch 1 oder 2, wobei die Kopplungselemente (27, 29, 31, 33) jeweils Klemm- und/oder Rastelemente (28, 32) umfassen.

4. Förderstrecke nach einem der Ansprüche 1 bis 3, wobei die Kopplungselemente (27, 29, 31, 33) jeweils eine U-förmige Aufnahme für einen Abschnitt einer Traverse (14) aufweisen
und vorzugsweise die offene U-Seite der Aufnahmen der Kopplungselemente (31, 33) an einer der beiden Stirnseiten (30) zu einer Unterseite (23) des Bandunterstützungsmoduls (20, 20') weist
und vorzugsweise die offene U-Seite der Aufnahmen der Kopplungselemente (27, 29) an der anderen Stirnseite (26) des Bandunterstützungsmoduls (20, 20') in die Förderstreckenlängsrichtung (F) weist.

5. Förderstrecke nach einem der Ansprüche 1 bis 4, wobei die Kopplungselemente (27, 29, 31, 33) an den gegenüberliegenden Stirnseiten (26, 30) zueinander bezüglich der Bandauflagefläche (21) punktsymetrisch zu einem auf der Bandauflagefläche (21) des Bandunterstützungsmoduls (20, 20') liegenden Mittelpunkt (M) angeordnet sind.

6. Förderstrecke nach einem der Ansprüche 1 bis 5, wobei die Kopplungselemente (27, 29, 31, 33) des Bandunterstützungsmoduls (20, 20'), welche zur Kopplung mit beabstandeten Traversen (14) dienen, in Förderstreckenlängsrichtung (F) in einem vorgegebenen Rasterabstand (I, I') voneinander beabstandet sind, wobei der Rasterabstand (I, I') vorzugsweise ein Vielfaches von 55 mm beträgt.

7. Förderstrecke nach einem der vorstehenden Ansprüche, wobei die Längsträger (11, 12) als Wangen (11, 12) ausgebildet sind und die Breite eines Bandunterstützungsmoduls (20, 20') geringer als ein lichtes Maß (f) zwischen den Wangen (11, 12) ist, vorzugsweise maximal die Hälfte des lichten Maßes (f) und besonders bevorzugt im Wesentlichen einen Teiler des lichten Maßes (f) beträgt.

8. Förderstrecke nach einem der vorstehenden Ansprüche, wobei in einem parallel zu den Bandunterstützungsmodulen (20, 20') in Förderstreckenlängsrichtung (F) verlaufenden Streifen (S) des Bandtragegerüsts (10) Transportrollen (40) angeordnet sind, die vorzugsweise auf den Traversen (14) gelagert sind.

9. Förderstrecke nach einem der vorstehenden Ansprüche, wobei die Bandunterstützungsmodule (20, 20') und/oder die Transportrollen (40) in Längsrichtung der Traversen (14) verschiebbar an den Traversen (14) gehalten werden und vorzugsweise mittels auf den Traversen (14) angeordneter fixierbarer Ringe (15) gegen eine Verschiebung in Längsrichtung der Traversen (14) gesichert werden.

10. Förderstrecke nach einem der vorstehenden Ansprüche, wobei die Bandauflagefläche (21) eine Lochstruktur (22) aufweist und vorzugsweise als wabenähnliche Struktur (22) ausgebildet ist.

11. Förderstrecke nach einem der vorstehenden Ansprüche, wobei die Bandunterstützungsmodule (20, 20') Transportbandunterstützungsrollen umfassen und/oder zumindest an einer in Förderstreckenlängsrichtung (F) verlaufenden Längsseite (25) ein sich nach oben über die Bandauflagefläche (21) herausragendes Bandführungselement (25K) aufweisen.

12. Förderanlage (1) mit einer Förderstrecke (10) nach einem der vorstehenden Ansprüche und einem Förderband (2, 3, 4), welches zumindest bereichsweise auf den Bandunterstützungsmodulen (20, 20') der Förderstrecke (10) aufliegt.

13. Förderanlage nach Anspruch 12, wobei in einem parallel zu dem Transportband (2) verlaufenden Streifen (S) des Bandtragegerüsts (10) Transportrollen (40) angeordnet sind und die Höhe der Bandunterstützungsmodule (20, 20') über den Traversen (14) und die Dicke (d_{T}) des Transportbands (2) so gewählt sind, dass eine Objektauflageseite (O) des Transportbands (2) in einer Ebene (E) mit einer oberen Tangente am Umfang der Transportrollen (40) ist.

14. Verfahren zum Aufbau einer Förderstrecke (10) nach einem der Ansprüche 1 bis 11 zum Transport von Objekten mittels eines Förderbands (2, 3, 4), umfassend
- Aufstellen eines Bandtragegerüsts (10) mit zumindest zwei sich in einer Förderstreckenlängsrichtung (F) verlaufenden Längsträgern (11, 12) und einer Anzahl quer zur Förderstreckenlängsrichtung (F) verlaufenden Traversen (14),
- Erstellung einer Bandunterstützung am Bandtragegerüst (10) durch Koppeln einer Anzahl von im Wesentlichen in einem Spritzgussverfahren hergestellten Bandunterstützungsmodulen (20, 20') mit den Traversen (14), so dass sich die Bandunterstützungsmodule (20, 20') in Förderstreckenlängsrichtung (F) zwischen zumindest zwei Traversen (14) erstrecken, wobei die Bandunterstützungsmodule (20, 20') jeweils eine im bestimmungsgemäßen Einsatz zu einem Förderband (2, 3, 4) weisende Bandauflagefläche (21) aufweisen.

## Claims

1. Conveyor line (5) for the transport of objects by means of a conveyor belt (2, 3, 4), with at least
- one belt support frame (10) with at least two longitudinal beams (11, 12) running in a longitudinal direction (F) and a plurality of cross beams (14) running transversely to the longitudinal direction of the conveyor (F),
- a plurality of belt support modules (20, 20'), preferably being a single piece, coupled with the cross beams (14), which extend in the longitudinal direction of the conveyor line (F) between at least two cross beams (14) and each comprise a belt supporting surface (21) pointing towards a conveyor belt (2, 3, 4) in the intended use, wherein the belt support modules (20, 20') are essentially manufactured by means of an injection moulding process, wherein the belt support modules (20, 20') each comprise a number of coupling elements (27, 29, 31, 33) to detachably fix the band support modules (20, 20') to the cross beams (14).

2. Conveyor line according to Claim 1, wherein the belt support modules (20, 20') each comprise a plurality of coupling elements (27, 29, 31, 33) on two end faces (26, 30) arranged in the longitudinal direction of the conveyor line (F) at the front and back of the respective belt support module (20, 20') to fix the belt support modules (20, 20') on the cross beams (14) in each case, preferably without the use of any tools.

3. Conveyor line according to Claim 1 or 2, wherein the coupling elements (27, 29, 31, 33) each comprise clamping and/or latching elements (28, 32).

4. Conveyor line according to any one of the Claims 1 to 3, wherein the coupling elements (27, 29, 31, 33) each comprise a U-shaped receptacle for a section of a cross beam (14) and preferably the open U-side of the receptacles of the coupling elements (31, 33) on one of the two end faces (30) points towards an underside (23) of the band support module (20, 20')
and preferably the open U-side of the receptacles of the coupling elements (27, 29) on the other end face (26) of the belt support module (20, 20') points in the longitudinal direction of the conveyor line (F).

5. Conveyor line according to any one of the Claims 1 to 4, wherein the coupling elements (27, 29, 31, 33) are arranged on the opposite end faces (26, 30) to each other with respect to the belt supporting surface (21), thereby being arranged point-symmetrically towards a centre point (M) on the belt supporting surface (21) of the belt support module (20, 20').

6. Conveyor line according to any one of the Claims 1 to 5, wherein the coupling elements (27, 29, 31, 33) of the belt support module (20, 20'), which are used for coupling with spaced-away cross beams (14), are distanced from each other in the longitudinal direction of the conveyor line (F) at a specified raster spacing (I, I'), wherein the raster spacing (I, I') is preferably a multiple of 55 mm.

7. Conveyor line according to any one of the preceding claims, wherein the longitudinal beams (11, 12) are designed as flanges (11, 12) and the width of a belt support module (20, 20') is less than a clear width (f) between the flanges (11, 12), preferably a maximum of half of the clear width (f) and, being particularly preferred, essentially being a divisor of the clear width (f).

8. Conveyor line according to any one of the above claims, wherein transport rollers (40) are arranged on a strip (S) of the belt support frame (10) running in a parallel to the belt support modules (20, 20') in the longitudinal direction of the conveyor line (F), which transport rollers (40) are preferably mounted on the cross beams (14).

9. Conveyor line according to any one of the preceding claims, wherein the belt support modules (20, 20') and/or the transport rollers (40) in the longitudinal direction of the cross beams (14) are held on the cross beams (14) in such a way that they can be moved and are preferably secured against shifting in the longitudinal direction of the cross beams (14) by means of fixable rings (15) arranged on the cross beams (14).

10. Conveyor line according to any one of the above claims, wherein the belt supporting surface (21) comprises a perforated structure (22) and is preferably designed as a honeycomb-like structure (22).

11. Conveyor line according to any one of the preceding claims, wherein the belt support modules (20, 20') comprise conveyor belt support rollers and/or comprise a belt guiding element (25K) protruding upwardly over the belt support surface (21) at least on one longitudinal side (25) running in the longitudinal direction of the conveyor line (F).

12. Conveyor system (1) with a conveyor line (10) according to any one of the above claims and a conveyor belt (2, 3, 4), which rests at least partially on the belt support modules (20, 20') of the conveyor line (10).

13. Conveyor system according to Claim 12, wherein transport rollers (40) are arranged on a strip (S) of the belt support frame (10) running in parallel to the conveyor belt (2) and the height of the belt support modules (20, 20') over the cross beams (14) and the thickness (d_{T}) of the conveyor belt (2) are selected in such a way that an object support side (O) of the conveyor belt (2) is on a plane (E) with an upper tangent on the circumference of the transport rollers (40).

14. Method for building a conveyor line (10) according to any one of the Claims 1 to 11 for transporting objects by means of a conveyor belt (2, 3, 4), comprising
- setting up a belt support frame (10) with at least two longitudinal beams (11, 12) running in a longitudinal direction (F) and a plurality of cross beams (14) running transversely to the longitudinal direction of the conveyor (F),
- creating a belt support on the belt support frame (10) by coupling a plurality of belt support modules (20, 20') essentially manufactured by means of an injection moulding process with the cross beams (14) so that the belt support modules (20, 20') extend in the longitudinal direction of the conveyor line (F) between at least two cross beams (14), wherein the belt support modules (20, 20') each comprise a belt supporting surface (21) pointing towards a conveyor belt (2, 3, 4) in the intended use.

## Revendications

1. Voie de transport (5) destinée au transport d'objets au moyen d'une bande de transport (2, 3, 4), avec au moins
- une infrastructure de convoyeur (10) avec au moins deux longerons (11, 12) passant dans une direction longitudinale de voie de transport (F) et un nombre de traverses (14) passant transversalement à la direction longitudinale de voie de transport (F),
- un nombre de modules de support de bande (20, 20') de préférence respectivement en une pièce, couplés aux traverses (14), lesquels s'étendent dans la direction longitudinale de voie de transport (F) entre au moins deux traverses (14) et comportent respectivement une surface d'appui de bande (21) dirigée vers une bande de transport (2, 3, 4) dans un usage conforme aux dispositions, sachant que les modules de support de bande (20, 20') sont fabriqués pour l'essentiel dans un procédé de moulage par injection, sachant que les modules de support de bande (20, 20') comportent respectivement un nombre d'éléments de couplage (27, 29, 31, 33), pour fixer de façon amovible les modules de support de bande (20, 20') aux traverses (14).

2. Voie de transport selon la revendication 1, sachant que les modules de support de bande (20, 20') comportent respectivement un nombre d'éléments de couplage (27, 29, 31, 33) sur deux côtés frontaux (26, 30) disposés dans la direction longitudinale de transport (F) à l'avant et à l'arrière sur le module de support de bande respectif (20, 20'), pour fixer respectivement, de préférence sans outil, les modules de support de bande (20, 20') aux traverses (14).

3. Voie de transport selon la revendication 1 ou 2, sachant que les éléments de couplage (27, 29, 31, 33) comprennent respectivement des éléments de serrage et/ou d'emboîtage (28, 32).

4. Voie de transport selon l'une quelconque des revendications 1 à 3, sachant que les éléments de couplage (27, 29, 31, 33) comportent respectivement un logement en forme de U pour un tronçon d'une traverse (14)
et le côté ouvert en forme de U des logements des éléments de couplage (31, 33) est dirigé de préférence sur un des deux côtés frontaux (30) vers un côté inférieur (23) du module de support de bande (20, 20')
et le côté ouvert en forme de U des logements des éléments de couplage (27, 29) est dirigé de préférence l'autre côté frontal (26) du module de support de bande (20, 20') dans la direction longitudinale de la voie de transport (F).

5. Voie de transport selon l'une quelconque des revendications 1 bis 4, sachant que les éléments de couplage (27, 29, 31, 33) sont disposés sur les côtés frontaux opposés (26, 30) l'un par rapport à l'autre eu égard à la surface d'appui de bande (21) en symétrie ponctuelle par rapport à un point médian (M) situé sur la surface d'appui de bande (21) du module de support de bande (20, 20').

6. Voie de transport selon l'une quelconque des revendications 1 bis 5, sachant que les éléments de couplage (27, 29, 31, 33) du module de support de bande (20, 20'), lesquels servent au couplage avec les traverses (14) à distance, sont éloignés les uns des autres dans la direction longitudinale de la voie de transport (F) à une distance d'emboîtement prédéfinie (I, I'), sachant que la distance d'emboîtement (I, I') est de préférence un multiple de 55 mm.

7. Voie de transport selon l'une quelconque des revendications précédentes, sachant que les longerons (11, 12) sont constitués comme des limons (11, 12) et la largeur d'un module de support de bande (20, 20') est plus faible qu'une mesure intérieure (f) entre les limons (11, 12), est de préférence au maximum la moitié de la mesure intérieure (f) et en particulier de préférence pour l'essentiel un diviseur de la mesure intérieure (f).

8. Voie de transport selon l'une quelconque des revendications précédentes, sachant que dans les bandes (S) de l'infrastructure de convoyeurs (10) passant parallèlement aux modules de support de bande (20, 20') dans la direction longitudinale de la voie de transport (F), sont disposés des rouleaux de transport (40), qui sont de préférence logés sur les traverses (14).

9. Voie de transport selon l'une quelconque des revendications précédentes, sachant que les modules de support de bande (20, 20') et/ou les rouleaux de transport (40) sont maintenus en direction longitudinale des traverses (14) pouvant être déplacés sur les traverses (14) et sont sécurisés de préférence au moyen de bagues (15) fixables disposées sur les traverses (14) envers tout déplacement dans la direction longitudinale des traverses (14).

10. Voie de transport selon l'une quelconque des revendications précédentes, sachant que la surface d'appui de bande (21) comporte une structure perforée (22) et est constituée de préférence comme une structure alvéolée (22).

11. Voie de transport selon l'une quelconque des revendications précédentes, sachant que les modules de support de bande (20, 20') comprennent des rouleaux de support de bande de transport et/ou comportent au moins sur un côté longitudinal (25) passant en direction longitudinale de la voie de transport (F), un élément de guidage de bande (25K) ressortant vers le haut sur la surface d'appui de bande (21).

12. Installation de transport (1) avec une voie de transport (10) selon l'une quelconque des revendications précédentes et une bande de transport (2, 3, 4), laquelle repose au moins en partie sur les modules de support de bande (20, 20') de la voie de transport (10).

13. Installation de transport selon la revendication 12, sachant que dans une bande (S) de l'infrastructure de convoyeur (10) passant parallèlement à la bande de transport (2), sont disposés des rouleaux de transport (40) et que la hauteur des modules de support de bande (20, 20') au-dessus des traverses (14) et l'épaisseur (d_{T}) de la bande de transport (2) sont choisies de telle manière qu'un côté d'appui d'objet (O) de la bande de transport (2) se trouve dans un plan (E) avec une tangente supérieure à la périphérie des rouleaux de transport (40).

14. Procédé destiné à la construction d'une voie de transport (10) selon l'une quelconque des revendications 1 à 11 pour le transport d'objets au moyen d'une bande de transport (2, 3, 4), comprenant
- le montage d'une infrastructure de convoyeur (10) avec au moins deux longerons (11, 12) passant dans une direction longitudinale de voie de transport (F) et un nombre de traverses (14) passant transversalement à la direction longitudinale de la voie de transport (F),
- l'établissement d'un support de bande sur l'infrastructure de convoyeur (10) par couplage d'un nombre de modules de support de bande (20, 20') pour l'essentiel fabriqués dans un procédé de moulage par injection aux traverses (14), de telle manière que les modules de support de bande (20, 20') s'étendent dans la direction longitudinale de la voie de transport (F) entre au moins deux traverses (14), sachant que les modules de support de bande (20, 20') comportent respectivement une surface d'appui de bande (21) dirigée vers une bande de transport (2, 3, 4) dans un usage conforme aux dispositions.
